# EUROPÄISCHE PATENTSCHRIFT

(11) **EP 1 306 668 B1**
(45) Veröffentlichungstag und Bekanntmachung des Hinweises auf die Patenterteilung: **09.04.2008**
(21) Anmeldenummer: 02023448.0
(22) Anmeldetag: 21.10.2002
(51) Int. Cl.: G01N 30/60, B01D 15/08

(54) **Chromatographiesäule mit Nachstellkolben**
Chromatography column with adjustable plunger
Colonne de chromatographie avec piston réglable

(30) Priorität: 25.10.2001 EP 01125282
(43) Veröffentlichungstag der Anmeldung: 02.05.2003
(73) Patentinhaber: Götec Labortechnik GmbH, 64367 Mühltal/Nd.-Ramstadt (DE)
(72) Erfinder: Göbel, Helmut G., 64367 Mühltal/Nieder-Ramstadt (DE); Göbel, Sebastian H., 64367 Mühltal/Nieder-Ramstadt (DE); Göbel, Michael T., 64367 Mühltal/Nieder-Ramstadt (DE); Watkowiak, Ralf, 65817 Eppstein/Vock (DE)
(74) Vertreter: Benz, Jürgen

(56) Entgegenhaltungen:
- WO-A-99/26724
- DE-A- 4 106 631
- GB-A- 2 350 071
- US-A- 5 194 225
- US-A- 6 156 196

## Beschreibung

Die Erfindung betrifft ein Chromatographiesäulen-Kartuschensystem, welche einen Säulenkörper aus kunststoff und umfasst, einen Säulenverschluss der individuell nachgestellt werden kann, und eine Spannschraube besitzt, die ein selbst-schneidendes Gewinde aufweist. Das erfindungsgemäße system, gewährleistet nicht nur den einwandfreien Chromatographiebetrieb der Säule über diverse Läufe, sondern ist zudem in seiner baulichen. Ausführung einfach und somit kostengünstig zu produzieren. Die Erfindung betrifft insbesondere die Verwendung derartiger Säulen bzw. Systeme für die Flüssigkeits- Flash-Chromatographie, insbesondere im Nieder- und Mitteldruckbereich.

Herkömmliche Chromatographiesäulen des Standes der Technik insbesondere für die Flüssigkeits-Flashchromatograpie enthalten das Füllmaterial bzw. Sorbens zwischen zwei Filterplatten, welches am Eingang und am Ausgang der Säule durch Filterplatten platziert sind. Die für ein spezielle Chromatographie notwendige homogene Packungsdichte wird durch entsprechende Füllverfahren erzielt. Trotz sorgfältiger Säulenpackungen bleibt es nicht aus, das nach Equilibrieren der Säule oder nach Auftragung der zu trennenden flüssigen Probe auf die Säule, das Sorbens insbesondere an den Rändern nachgibt, bzw. sich verdichtet. Hierdurch treten Totvolumen auf, bzw. es kommt durch unterschiedliche Verdichtungen zu Rückläufen der aufgetragenen Probe. Diese Effekte haben ungünstige Wirkungen auf die Trennleistung des Chromatographiesystems.

Die US Patentschrift 5,194,225 beschreibt eine aus Glas bestehende druckstabile Chromatographiesäule mit an beiden Enden aufschraubbaren Säulenanschlussteilen, welche Kolben integriert haben, die auf der Sorbensfläche aufsitzen, und von denen vorzugsweise einer in der Höhe verstellbar ist. Die Anschlussteile sind nicht selbstschneidend und sind auch nicht gedacht, während des Chromatographiebetriebes an die Sorbensoberfläche angepasst zu werden..

Die WO 99/26724 beschreibt ein Mehrkammervorrichtung zur sequenziellen Analyse von biologischen Material, welches in einzelnen Kompartimenten eines Rohres, die durch leicht zerstörbare Wände von einander getrennt sind, unterschiedlichen analytischen Prozessen unterworfen. Mittels einer Pumpvorrichtung, die aus einem selbstschneidenden Gewindekolben innerhalb des Rohres bestehen kann, wird das gelöste Material von einem Kompartiment in das nächste gedrückt.

Für den Routine- und Massenbetrieb müssen die Säulen zudem einfach zu handhaben und aus Kostengründen zumindest teilweise wieder verwendbar sein. Bei diesen einfachen Chromatographiesystemen (Flash-Chromatographie) ist das beschriebene Problem von Totvolumen und Eluent-Rückläufen besonders angesagt.

Es bestand somit die Aufgabe für speziell den besagten Anwendungsbereich Chromatographiesäulen zur Verfügung zu stellen, welche die besagten Mängel nicht aufweisen, dabei aber einfach in der Handhabung und preiswert in der Herstellung zu sein.

Die Aufgabe wurde gelöst durch das erfindungsgemäße Chromatographiesäulen-Kartuschensystem, wie es unten und in den Ansprüchen näher beschrieben ist.

Die erfindungsgemäßen Säulen zeichnen sich insbesondere dadurch aus, dass das jedes Nachgeben des Sorbensmaterials durch einfaches, vorzugsweise händisches Nachregulierung des in den Säulenkopf integrierten Kolbens egalisiert werden kann, so dass zu jeder Zeit eine optimale Verteilung des Eluents gewährleistet ist und zu keiner Zeit Totvolumina oder Rückläufe auftreten, welche die trennleistung negativ beeinflussen. Somit kann ein und die selbe Säule, bzw. Säulenfüllung viele Male hintereinander verwendet werden, ohne dass sich Leistungsverluste einstellen. Überdies kann der Säulenkopf immer wieder eingesetzt werden, wodurch die entsprechenden Chromatographien äußerst preiswert durchgeführt werden können.

Aufgrund ihrer Beschaffenheit und ihres Einsatzzweckes eignen sich die erfindungsgemäßen Säulen für den Einsatz im Nieder-, Mittel- und Hochdruckbereich, vorzugsweise jedoch im Nieder-, Mitteldruckbereich, also zwischen 0 und 30 bar, besonders bevorzugt im Niederdruckbereich zwischen 0 und 5 bar, insbesondere zwischen 0 und 3 bar.

Als besonders vorteilhaft hat es sich erwiesen, wenn die besagten Chromatographiesäulen neben der unmittelbar auf dem Sorbens (6) aufliegenden Filterplatte (5) mit einer zusätzlichen verschiebbaren Verteilerplatte (4) ausgestattet sind, welche unmittelbar über der Filterplatte angeordnet ist. Eine solche Verteilerplatte gewährleistet im besonderen Maße, dass sich Flüssigkeit / Eluent (9) optimal über den gesamten Querschnitt der Säule (7) verteilt, nach dem der Kolben (2) weiter in Richtung des Säulenausgangs verschoben worden ist, um an das abgesenkte Niveau des Füllmaterials angepasst zu werden. Die Verteilerplatte ist erfindungsgemäß ebenso wie vorzugsweise die Filterplatte aus Polypropylen oder ähnlichen Kunststoffen und unterscheidet sich von letztere durch eine größere Maschenweite, welche im wesentlichen keine Filterfunktion haben. Die Verteilerplatte kann auch aus anderen geeigneten Materialien bestehen, beispielsweise aus entsprechend poröser Keramik.

Als Dichtmittel können erfindungsgemäß Ring-Dichtungen (O-Ringe) in Gummi oder weicheren Kunststoffen des Standes der Technik verwendet werden. Die Dichtmittel müssen einerseits gut gegen die Wandung des Säulenkörpers abdichten, andrerseits müssen sie leicht in den Säulenkörper einzulegen, diesem wieder zu entnehmen aber vor allem gut verschiebbar sein, ohne dass hierdurch Abdichtungsprobleme entstehen. Die Dichtmittel werden vorzugsweise in den Säulenkörper eingelegt. Sie können aber auch mit dem Kolben fest integriert sein, d. h der Kolben kann erfindungsgemäß auch eine ringförmige Dichtlippe aufweisen, die passend mit der Säulenwand abschließt.

Das erfindungsgemäße Chromatographiesäulen-Kartuschensystem besteht im wesentlichen aus dem Säulenkörper (7) aus Kunststoff, besagten Trennplatten, welche die Funktion von Filter- und / oder Verteilerplatten besitzen, den Dichtelementen, vorzugsweise O-Ringen, und insbesondere dem variablen, wieder einsetzbaren Säulenabschluss-Teil (8), welches sich im wesentlichen aus dem verschiebbaren Kolben (2) und Spannvorrichtungen bzw. Mitteln zum individuellen Verschieben des Kolbens (1) zusammensetzt.

Diese Mittel bzw. Spannvorrichtungen (1) sind mit erfindungswesentlich und können in verschiedenen Ausführungsformen gestaltet sein, sind . Prinzipiell haben Sie aber die Funktion einer mit einem Gewinde versehenen Schraube oder Mutter, welche durch ein- oder aufschrauben letztlich in oder auf den Säulenkörper eine variable Höhe des integrierten mitgeführten Kolbens bewirkt. Die daraus resultierende Höhendifferenz entspricht dem Nachstellweg (d) des Säulenabschlussteils. Wichtig ist, dass die Ganghöhe des Gewindes so gewählt ist, dass entsprechend feine Änderungen von (d) vorgenommen werden können. Erfindungsgemäß liegt die Ganghöhe zwischen 0.5 und 4 mm vorzugsweise zwischen 1 und 2 mm.

Die Änderungen des Nachstellweges (d) werden erfindungsgemäß von Hand vorgenommen, sobald visuell festgestellt wird, dass die Höhe des Sorbens sich durch Verdichten oder Aufquellen verändert hat. Es ist aber auch möglich, dass der Vorgang des Nachstellens automatisiert werden kann. So kann beispielsweise die Grenzfläche zwischen unterer Trennplatte (4, 5) und Sorbens durch optische Mittel überwacht und somit das Absinken des Säulenmaterials festgestellt werden. Durch entsprechende an sich bekannte elektromechanische Einrichtungen kann dann automatisch der Kolben (2) nachreguliert werden.

In einer besonderen und praktischen Ausführungsform besteht das Kartuschensystem aus einer handelsüblichen, aus Kunststoff bestehenden Injektionsspritze, welche mit einem entsprechenden erfindungsgemäßen nachstellbaren Säulenverschluss versehen ist, und letzterer in Form einer Schraube ein selbst-schneidendes Gewinde aufweist, um bei Erstbenutzung der Injektionsspritze ein Innengewinde am Eingang der Spritze zu erzeugen. Das Erzeugen eines Innengewindes in den Säulenkörper mittels Schrauben erfolgt vorzugsweise mit Hilfe des in handelsüblichen Spritzen vorhandenen Kolbenstops.

Gegenstand der Erfindung ist somit ein Chromatographiesäulen-Kartuschensystem, bestehend im wesentlichen aus
(i) einem Säulenkörper (7) aus einem Kunststoffmaterial, das für die Bearbeitung mit einem Gewindeschneider geeignet ist zur Aufnahme des Sorbens (6) mit einem Innen- oder Außengewinde im oberen Bereich zur Verbindung mit dem Säulenabschlusssystem nach Merkmal (iii),
(ii) Dichtmittel (3) und mindestens einer zur Flüssigkeitspassage befähigten Trennplatte (4, 5), und
(iii) einem Säulenabschlusssystem (8), welches am Eingang des Säulenkörpers befestigt ist und im wesentlichen aus Spannvorrichtungen (1) sowie einem zylindrischen Kolben (2) besteht, welcher mit Hilfe der Spannvorrichtung passgenau in die Öffnung des Säulenkörpers bis unmittelbar über das Sorbens bzw. die darüber befindliche(n) besagte(n) Trennplatte(n) bewegt werden kann und zentrisch ein Kapillarrohr zum Aufbringen von Flüssigkeit/ Eluent (9) auf die Trennplatte(n) besitzt, wobei die Spannvorrichtungen eine zentrische zylindrische Öffnung zur Aufnahme des Kolbens (2) haben, welcher ebenso wie die Dichtmittel (3) und die Trennplatte(n) (4, 5) mittels der Spannvorrichtungen in seiner Höhe individuell verstellbar ist und somit immer an die im Verlaufe des Chromatographiebetriebes sich geänderte Höhe des Sorbens angepasst werden können, ohne dass ein Rücklauf der Flüssigkeit auftritt oder ein Totvolumen entsteht wobei die Spannvorrichtung (1) aus einer Spannschraube (1a) besteht, welche ein selbstschneiden des Gewinde aufweist.

Gegenstand der Erfindung ist insbesondere auch ein entsprechendes Chromatographiesäulen-Kartuschensystem, bei dem zwei Trennplatten in Form einer Verteilerplatte (4) und einer Filterplatte (5) vorliegen, welche beide sich über den gesamten Säulenquerschnitt erstrecken. Vorzugsweise ist die Verteilerplatte oberhalb der Filterplatte angeordnet.

In einer bevorzugten Ausführungsform ist Gegenstand der Erfindung ein entsprechendes Chromatographiesäulen-Kartuschensystem, bei dem die Spannvorrichtung (1) aus einer Spannschraube (1a) besteht welche ein selbstschneidendes Gewinde (1e) aufweist, und der Säulenkörper (7) eine Injektionsspritze ist, die aus einem Kunststoffmaterial gefertigt ist, welches für die Bearbeitung durch einen Gewindeschneider geeignet ist.

Letztlich ist Gegenstand der Erfindung die Verwendung des entsprechenden Chromatographiesäulen-Kartuschensystem wie oben und in den Ansprüchen beschrieben für die Flüssigkeits-Flashchromatographie, insbesondere für den Betrieb im Nieder- und Mitteldruckbereich.

Im folgenden werden die Abbildungen kurz beschrieben:

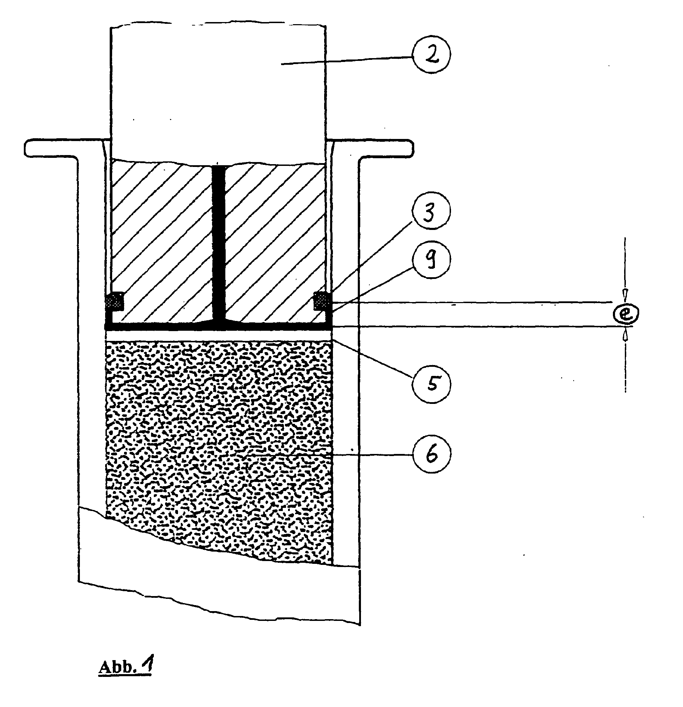

Abb. 1: Darstellung einer betriebsbereiten Säule des Standes der Technik, ohne verstellbaren Säulenabschluss mit Darstellung des nachteiligen Rücklaufes des Eluents.

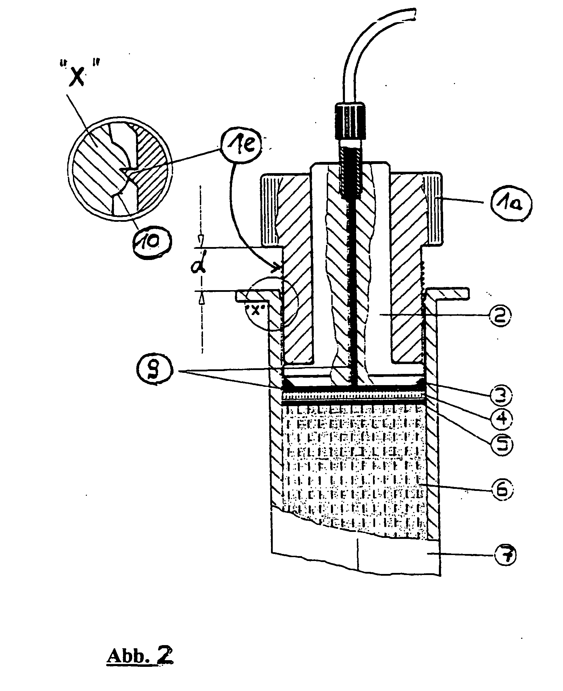

Abb. 2: erfindungsgemäßes Chromatographiesystem mit selbst-schneidendem Gewinde und Injektionsspritze als Säulenkörper. Der Ausschnitt "X" gibt das Einschneiden des Gewindes in den Säulenkörper über den üblicherweise vorhandenen Kolbenstop wieder. (d) gibt den Abstand wieder, um den der kolben in den Säulenkörper eingeschraubt werden kann.

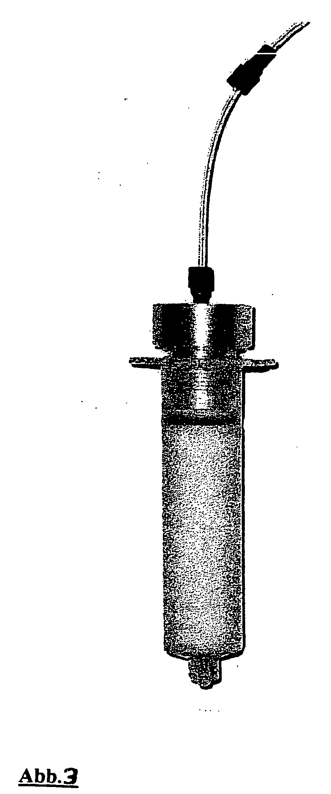

Abb. 3: Kolbensystem einer Ausführungsform gemäß Abb. 2.

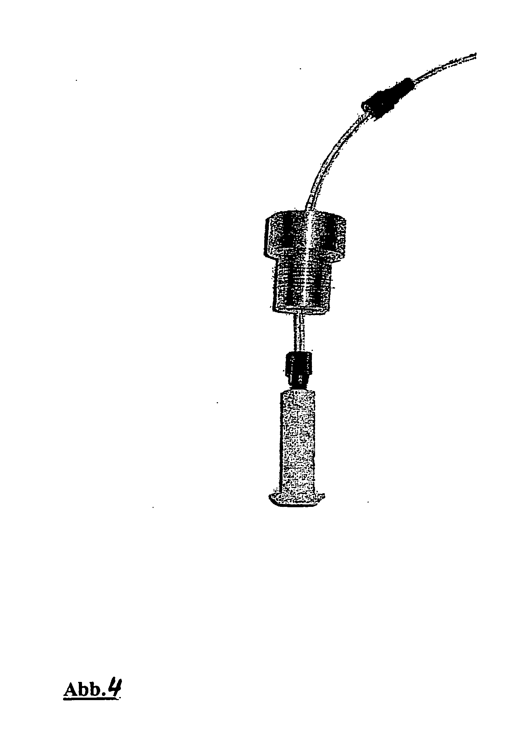

Abb. 4: Ausführungsform nach Abb. 2 in produktionsreifem Zustand.

Im folgenden werden die einzelnen Bezugsgrößen, welche in den Abbildungen und im Text verwendet werden, kurz beschrieben

| | |
|---|---|
| 1 | Spannvorrichtung |
| 1a | Spannmutter, Spannschraube |
| 1e | selbst-schneidendes Gewinde |
| 2 | Kolben |
| 3 | Dichtmittel (O-Ring) |
| 4 | Verteilerplatte |
| 5 | Filterplatte |
| 6 | Sorbens (Chromatographieträgermaterial) |
| 7 | Säulenkörper |
| 8 | Kolbensystem |
| 9 | Flüssigkeit / Eluent |
| 10 | Kolbenstop in einer Fertig-Injektionsspritze |
| d | Nachstellweg des Kolbens |
| "X" | Ausschnitt aus Abb. 2 |

## Patentansprüche

1. Chromatographiesäulen-Kartuschensystem bestehend aus
(i) einem Säulenkörper (7) zur Aufnahme des Sorbens (6) mit einem Innen- oder Außengewinde im oberen Bereich zur Verbindung mit einem Säulenabschlusssystem,
(ii) Dichtmittel (3) und mindestens einer zur Flüssigkeitspassage befähigten Trennplatte (4, 5), und
(iii) einem Säulenabschlusssystem (8), welches am Eingang des Säulenkörpers befestigt ist und im wesentlichen aus einer Spannvorrichtung (1) sowie einem zylindrischen Kolben (2) besteht, welcher mit Hilfe der Spannvorrichtung passgenau in die Öffnung des Säulenkörpers bis unmittelbar über das Sorbens bzw. die darüber befindliche(n) besagte(n) Trennplatte(n) bewegt werden kann und zentrisch ein Kapillarrohr zum Aufbringen von Flüssigkeit/ Eluent (9) auf die Trennplatte(n) besitzt, wobei die Spannvorrichtung eine zentrische zylindrische Öffnung zur Aufnahme des Kolbens (2) besitzt, welcher mit Hilfe besagter Spannvorrichtung ebenso wie die Dichtmittel (3) und die Trennplatte(n) (4, 5) in der Höhe individuell verstellbar ist, **dadurch gekennzeichnet, dass**
die Spannvorrichtung (1) aus einer Spannschraube (1a) besteht, welche ein selbstschneidendes Gewinde (1e) aufweist, und der Säulenkörper (7) aus einem Kunststoffmaterial gefertigt ist, welches für die Bearbeitung durch einen Gewindeschneider geeignet ist.

2. Chromatographiesäulen-Kartuschensystem nach Anspruch 1, **dadurch gekennzeichnet, dass** die Spannschraube (1a) in den Säulenkörper (7) eingeschraubt oder auf den Säulenkörper (7) aufgeschraubt ist.

3. Chromatographiesäulen-Kartuschensystem nach Anspruch 1 oder 2, **dadurch gekennzeichnet, dass** die Ganghöhe des Gewindes 1 bis 2 mm beträgt.

4. Chromatographiesäulen-Kartuschensystem nach einem der Ansprüche 1 - 3, **dadurch gekennzeichnet, dass** zwei Trennplatten in Form einer Verteilerplatte (4) gefolgt von einer Filterplatte (5), welche beide sich über den gesamten Säulenquerschnitt erstrecken, eingesetzt sind.

5. Chromatographiesäulen-Kartuschensystem nach einem der Ansprüche 1 - 4, **dadurch gekennzeichnet, dass** der Säulenkörper (7) eine Injektionsspritze ist.

6. Verwendung eines Chrotnatographiesäulen-Karrnschensystems nach einem der Ansprüche 1 - 5 für die Flüssigkeits-Flashchromatographie.

7. Verwendung eines Chromatographiesäulen-Kartuschensystems nach Anspruch 6 für den Betrieb im Nieder- und Mitteldruckbereich.

8. Verwendung eines Chromatographiesäulen-Kartuschensystems gemäß Anspruch 6 oder 7, **dadurch gekennzeichnet, dass** Kolben (2), Dichtmittel (3) und Trennplatte(n) (4, 5) im Verlaufe des Chromatographiebetriebes der sich ändernden Höhe des Sorbens angepasst werden, so dass kein Rücklauf der Flüssigkeit auftritt oder ein Totvolumen entsteht.

## Claims

1. Chromatography column cartridge system consisting of
(i) a column body (7) for accommodating the sorbent (6), having an internal or external thread in the upper region for connection to a column termination system,
(ii) sealing means (3) and at least one separating plate (4, 5) which is capable of the passage of liquid, and
(iii) a column termination system (8), which is attached to the entrance of the column body and essentially consists of a clamping device (1) and a cylindrical piston (2), which can be moved with the aid of the clamping device with an accurate fit into the opening of the column body until immediately above the sorbent or the said separating plate(s) located above the latter and has in the centre a capillary tube for the application of liquid/eluent (9) to the separating plate(s), where the clamping device has a central cylindrical aperture for accommodating the piston (2), which can be adjusted individually in height with the aid of said clamping device, like the sealing means (3) and the separating plate(s) (4, 5), **characterized in that**
the clamping device (1) consists of a clamping screw (1a), which has a self-tapping thread (1e), and the column body (7) is made from a plastic material which is suitable for cutting by a thread cutter.

2. Chromatography column cartridge system according to Claim 1, **characterized in that** the clamping screw (1a) is screwed into the column body (7) or onto the column body (7).

3. Chromatography column cartridge system according to Claim 1 or 2, **characterized in that** the pitch of the thread is 1 to 2 mm.

4. Chromatography column cartridge system according to one of Claims 1 - 3, **characterized in that** two separating plates in the form of a distribution plate (4) followed by a filter plate (5), both of which extend over the entire column cross-section, are employed.

5. Chromatography column cartridge system according to one of Claims 1 - 4, **characterized in that** the column body (7) is an injection syringe.

6. Use of a chromatography column cartridge system according to one of Claims 1 - 5 for liquid flash chromatography.

7. Use of a chromatography column cartridge system according to Claim 6 for operation in the low- and medium-pressure range.

8. Use of a chromatography column cartridge system according to Claim 6 or 7, **characterized in that** the piston (2), sealing means (3) and separating plate(s) (4, 5) are matched to the changing height of the sorbent during the chromatography operation, so that no run-back of the liquid occurs or a dead space forms.

## Revendications

1. Système de cartouche de colonne de chromatographie constitué par
(i) un corps de colonne (7) pour loger le sorbant (6), comportant un filet interne ou externe dans la région supérieure pour une connexion sur un système de raccordement de colonne,
(ii) un moyen d'étanchéité (3) et au moins une plaque de séparation (4, 5) qui peut laisser passer un liquide, et
(iii) un système de raccordement de colonne (8), qui est lié sur l'entrée du corps de colonne et qui est constitué essentiellement par un dispositif de fixation (1) et par un piston cylindrique (2), lequel peut être déplacé à l'aide du dispositif de fixation selon un ajustement précis à l'intérieur de l'ouverture du corps de colonne jusqu'à immédiatement au-dessus du sorbant ou de ladite ou desdites plaque(s) de séparation localisée(s) au-dessus de ce dernier et comporte au centre un tube capillaire pour l'application d'un liquide/éluent (9) sur la plaque ou les plaques de séparation, où le dispositif de fixation comporte une ouverture cylindrique centrale pour loger le piston (2), lequel peut être réglé individuellement en hauteur à l'aide dudit dispositif de fixation, tout comme le moyen d'étanchéité (3) et la ou les plaque(s) de séparation (4, 5),
**caractérisé en ce que**
le dispositif de fixation (1) est constitué par une vis de fixation (1a) qui comporte un filet auto-taraudeur (le), et le corps de colonne (7) est réalisé à partir d'une matière plastique qui convient pour un usinage par un outil à fileter.

2. Système de cartouche de colonne de chromatographie selon la revendication 1, **caractérisé en ce que** la vis de fixation (1a) est vissée dans le corps de colonne (7) ou sur le corps de colonne (7).

3. Système de cartouche de colonne de chromatographie selon la revendication 1 ou 2, **caractérisé en ce que** le pas du filet est de 1 à 2 mm.

4. Système de cartouche de colonne de chromatographie selon l'une des revendications 1 - 3, **caractérisé en ce que** deux plaques de séparation sous la forme d'une plaque de distribution (4) suivie par une plaque de filtre (5) dont les deux s'étendent sur la totalité de la section en coupe transversale de la colonne sont utilisées.

5. Système de cartouche de colonne de chromatographie selon l'une des revendications 1 - 4, **caractérisé en ce que** le corps de colonne (7) est une seringue d'injection.

6. Utilisation d'un système de cartouche de colonne de chromatographie selon l'une des revendications 1 - 5 pour une chromatographie flash liquide.

7. Utilisation d'un système de cartouche de colonne de chromatographie selon la revendication 6 pour un fonctionnement dans la plage basses pressions et moyennes pressions.

8. Utilisation d'un système de cartouche de colonne de chromatographie selon la revendication 6 ou 7, **caractérisé en ce que** le piston (2), le moyen d'étanchéité (3) et la ou les plaque(s) de séparation (4, 5) sont adaptés à la hauteur qui varie du sorbant pendant l'opération de chromatographie de telle sorte qu'aucun reflux du liquide ne se produise ou qu'aucun espace mort ne se forme.
